Europäisches Patentamt

European Patent Office

Office européen des brevets

(19)

(11) **EP 0 761 953 B1**

(12) **FASCICULE DE BREVET EUROPEEN**

(45) Date de publication et mention
de la délivrance du brevet:
**22.03.2000   Bulletin 2000/12**

(51) Int Cl.⁷: **F02D 41/34**, G01M 15/00

(21) Numéro de dépôt: **96401671.1**

(22) Date de dépôt: **25.07.1996**

(54) **Dispositif de détection du cycle de fonctionnement d'un moteur à combustion interne à plusieurs cylindres**

Vorrichtung zur Erkennung du Kreisprozesstakt einer mehrzylindriger Brennkraftmaschine

Device for recognizing the operating cycle stroke of a multicylinder combustion engine

(84) Etats contractants désignés:
**DE GB IT**

(30) Priorité: **06.09.1995  FR 9510451**

(43) Date de publication de la demande:
**12.03.1997   Bulletin 1997/11**

(73) Titulaires:
 • **AUTOMOBILES PEUGEOT**
   **75116 Paris (FR)**
 • **AUTOMOBILES CITROEN**
   **92200 Neuilly-sur-Seine (FR)**

(72) Inventeur: **Lambert, Denis**
   **92270 Bois-Colombes (FR)**

(74) Mandataire:
   **Habasque, Etienne Joel Jean-François et al**
   **Cabinet Lavoix**
   **2, Place d'Estienne d'Orves**
   **75441 Paris Cédex 09 (FR)**

(56) Documents cités:
   **EP-A- 0 058 562**      **EP-A- 0 225 528**
   **EP-A- 0 412 018**      **EP-A- 0 611 952**
   **DE-A- 4 320 028**      **FR-A- 2 620 816**
   **US-A- 4 284 052**

# Description

La présente invention concerne un dispositif de détection du cycle de fonctionnement d'un moteur à combustion interne à plusieurs cylindres.

On connait déjà dans l'état de la technique, un certain nombre de dispositifs de détection de ce type, qui comportent une cible munie de moyens de codage de la position angulaire du moteur dans le cycle, reliée par exemple à un arbre à cames du moteur, et associée à un capteur de détection des moyens de codage de position lors de la rotation de la cible, ce capteur étant raccordé à des moyens de détection du cycle de fonctionnement du moteur par analyse du signal de sortie du capteur.

Différents documents de l'état de la technique décrivent de tels dispositifs.

On pourra par exemple se reporter aux documents FR-A-2 637 652, EP-A-572 584 et EP-A-602 692.

Tous les dispositifs de ce type ont été développés pour permettre l'optimisation des performances des moteurs à combustion interne, qui conduit à effectuer l'injection de carburant de manière séquentielle.

Ce carburant est alors distribué cylindre par cylindre par l'intermédiaire d'injecteurs électromécaniques contrôlés par un calculateur de contrôle du fonctionnement du moteur.

Ces dispositifs, réservés juqu'à présent aux moteurs à essence de hautes performances, tendent à être généralisés à tous les moteurs.

En effet, pour les moteurs à essence, la sévérisation des normes de dépollution va imposer l'injection séquentielle.

Pour les moteurs Diesel, l'injection est jusqu'à présent assurée par une pompe distributrice entraînée mécaniquement par le moteur et donc en synchronisme avec celui-ci.

Les études actuelles portant sur les systèmes d'injection directe pour les moteurs Diesel, montrent qu'il y a un vif intérêt, vis-à-vis des performances de bruit et de consommation, à contrôler de manière électronique l'injection de façon identique aux systèmes associés aux moteurs à essence, c'est-à-dire au moyen d'un calculateur pilotant des injecteurs électromécaniques.

Ces systèmes comportent un dispositif de détection du cycle de fonctionnement du moteur, de manière identique à ce qui se passe sur les moteurs à essence.

La détection de phase de fonctionnement du moteur est généralement assurée par un capteur disposé face à une cible reliée à un arbre à cames du moteur. Cet arbre à cames effectue un tour par cycle moteur et le repérage d'une singularité par exemple sur la cible permet d'initialiser la position angulaire du moteur dans le cycle.

Cependant, ce principe présente deux inconvénients.

Le premier inconvénient est qu'au démarrage, l'arbre à cames doit effectuer un tour pour que le repérage soit assuré, autrement dit, le moteur doit effectuer deux tours avant que la première injection de carburant soit commandée.

Par rapport à un système d'injection mécanique, dans lequel l'injection est immédiate dès le démarrage, l'injection électronique est caractérisée par un temps de démarrage plus long ce qui est pénalisant pour la consommation électrique du démarreur et pour le confort de l'utilisateur.

Pour pallier ce défaut, il est possible, dans le cas des moteurs à essence, d'effectuer l'injection par groupes de cylindres sous démarreur, puis de passer en injection séquentielle après démarrage.

En revanche, cette méthode ne peut pas être appliquée aux moteurs à injection directe.

Le second inconvénient réside dans le fait que la détection ne permet pas d'assurer un mode de fonctionnement de secours dans le cas où l'acquisition de la position angulaire du vilebrequin du moteur est défectueuse.

C'est pour cette raison que des formes de cible à plusieurs singularités ont été envisagées comme cela est décrit dans les documents mentionnés précédemment.

Cependant, les dispositifs décrits dans ces documents présentent des structures complexes.

On connaît également du document US-A-4 284 052, un dispositif de détection conforme au préambule de la revendication 1.

Cependant, dans ce dispositif, la détection du cycle se fait par comptage du nombre de dents associées à chaque cylindre.

On conçoit que ceci présente un certain nombre d'inconvénients, notamment au niveau de l'encombrement de ces dents et des risques de comptage erroné.

Le but de l'invention est donc de résoudre les problèmes évoqués précédemment.

A cet effet, l'invention a pour objet un dispositif de détection du cycle de fonctionnement d'un moteur à combustion interne à plusieurs cylindres, du type comportant une cible munie de moyens de codage de la position angulaire du moteur dans le cycle, reliée à un arbre à cames du moteur, et associée à un capteur de détection des moyens de codage de position lors de la rotation de la cible, raccordé à des moyens de détection du cycle de fonctionnement du moteur par analyse du signal de sortie du capteur, les moyens de codage de la cible comprenant au moins des codes binaires d'identification des numéros des cylindres du moteur composés chacun d'un code de synchronisation, de codes d'identification du numéro du cylindre correspondant, et d'un code de fin de codage, caractérisé en ce que les moyens de codage de la cible comprennent en outre pour chaque cylindre du moteur, un code de parité permettant la détection d'erreur.

Le dispositif selon l'invention permet donc de détecter le cycle de fonctionnement du moteur à partir d'une cible de forme particulière, ce qui permet de s'affranchir des inconvénients mentionnés précédemment.

Ce dispositif ne nécessite qu'un seul capteur et permet la détection de la phase de fonctionnement du moteur sous démarreur après trois-quart de tour du vilebrequin dans le cas d'un moteur à quatre cylindres par exemple.

Par ailleurs, et comme cela sera décrit plus en détail par la suite, ce dispositif permet d'assurer un mode de fonctionnement de secours en cas de défaillance du capteur vilebrequin en fournissant la position de l'arbre à cames avant les points morts hauts du moteur avec une précision dégradée mais suffisante.

L'invention sera mieux comprise à la lecture de la description qui va suivre, donnée uniquement à titre d'exemple et faite en se référant aux dessins annexés, sur lesquels :

- la Fig.1 représente un schéma synoptique illustrant la structure générale d'un dispositif de détection selon l'invention;
- la Fig.2 est un tableau illustrant le codage binaire d'identification des numéros de cylindres d'un moteur à quatre cylindres, utilisé dans le dispositif selon l'invention;
- la Fig.3 illustre le codage des informations dans un dispositif de détection selon l'invention;
- la Fig.4 est un exemple de codage;
- les Fig.5 et 6 illustrent la structure d'une partie de moyens d'analyse entrant dans la constitution d'un dispositif de détection selon l'invention;
- les Fig.7 et 8 représentent des graphiques illustrant le régime et l'accélération d'un moteur; et
- les Fig.9 et 10 représentent deux exemples de réalisation d'une cible entrant dans la constitution d'un dispositif de détection selon l'invention.

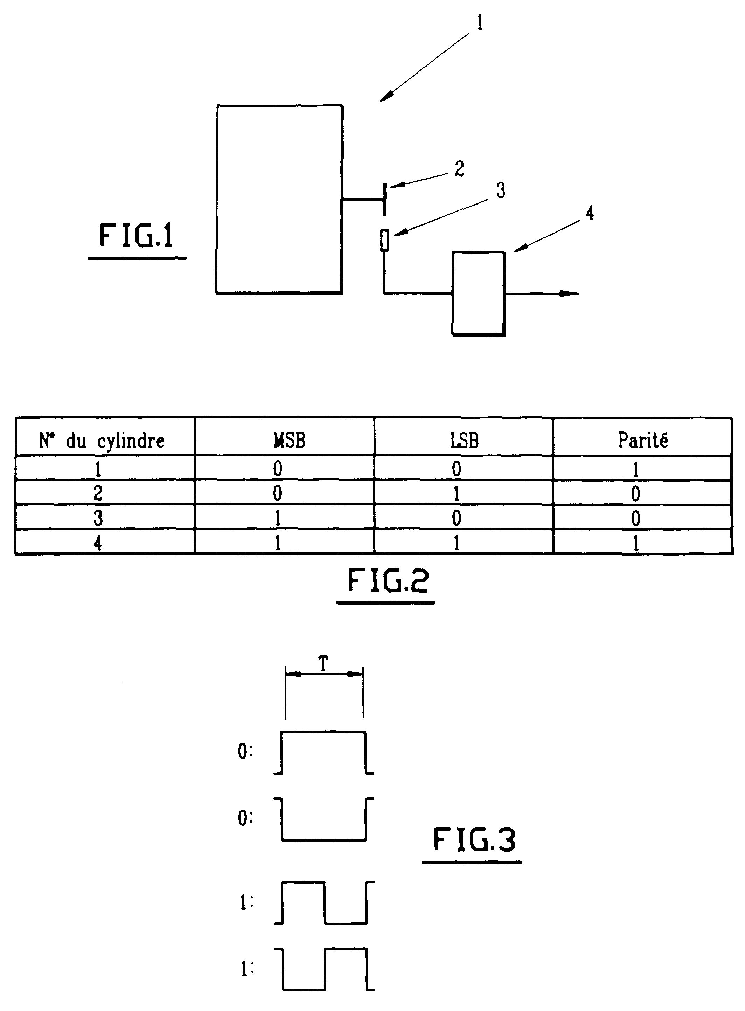

Ainsi qu'on peut le voir sur la figure 1, un dispositif de détection du cycle de fonctionnement d'un moteur à combustion interne à plusieurs cylindres, désigné par la référence générale 1 sur cette figure, comporte de façon classique une cible désignée par la référence générale 2, munie de moyens de codage de la position angulaire du moteur dans le cycle, reliée à un arbre à cames du moteur et associée à un capteur 3 de détection des moyens de codage de position lors de la rotation de la cible.

Ce capteur 3 est raccordé à des moyens 4 de détection du cycle de fonctionnement du moteur par analyse du signal de sortie du capteur.

Selon l'invention, les moyens de codage de la cible 2 comprennent au moins des codes binaires (bits) d'identification des numéros des cylindres du moteur.

Cette technique de codage binaire d'informations est déjà bien connue dans l'état de la technique, par exemple pour l'enregistrement des données sur une piste magnétique.

L'information de numéro du cylindre correspondant est codée en binaire sur deux bits, par exemple dans le cas où le moteur comporte quatre cylindres.

Cependant, étant donné qu'aucune erreur ne peut être admise, il est nécessaire d'ajouter à ce code d'identification, un code (bit) de parité.

On conçoit alors qu'il faut au moins deux codes erronés à la lecture pour que le numéro du cylindre correspondant soit pris pour un autre numéro.

Un exemple de codage pour un moteur à quatre cylindres est donné dans le tableau de la figure 2, dans lequel on voit que les quatre cylindres du moteur sont codés 00, 01, 10 et 11 respectivement.

Cependant, ce codage ne peut être directement appliqué à la cible du fait des variations de régime de rotation du moteur et de l'absence d'horloge de synchronisation. Il est donc nécessaire d'utiliser un codage permettant de restituer l'horloge d'échantillonnage.

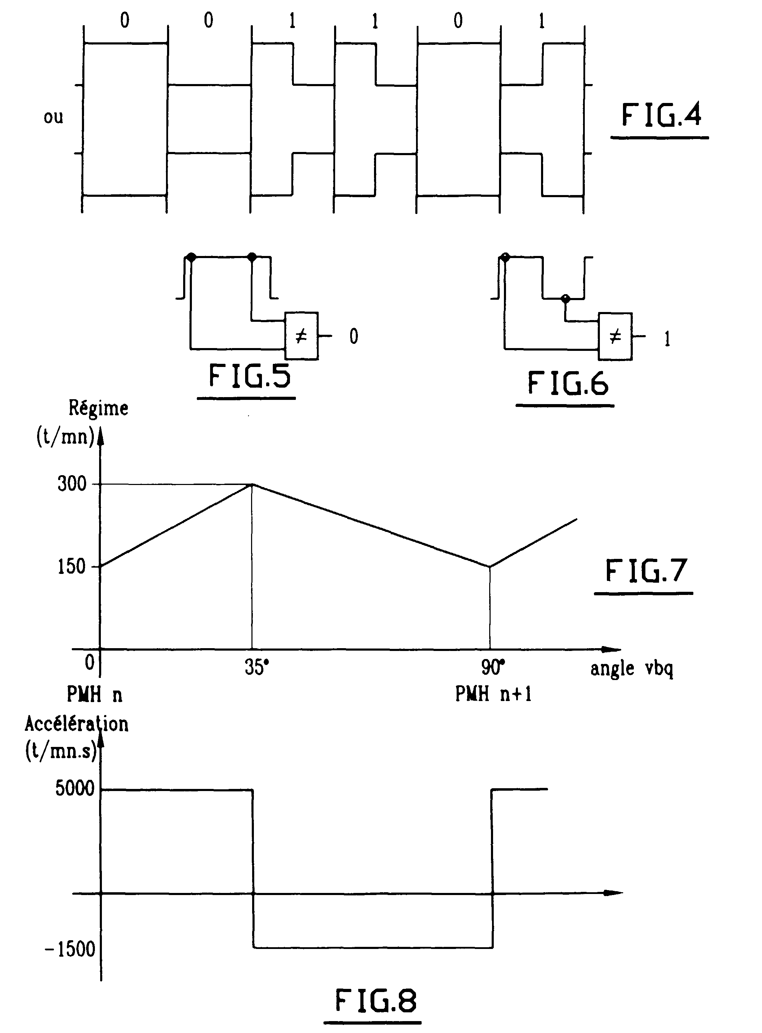

Comme cela est visible sur les figures 3 et 4, chaque partie de code, c'est-à-dire par exemple chaque bit, est codée sur une période de temps T délimitée par des changements d'état. Un état logique O est caractérisé par un état constant pendant la période T, tandis qu'un état logique 1 est caractérisé par un changement d'état à T/2 comme cela ressort de ces figures.

Le décodage de ces informations par les moyens d'analyse consiste alors à comparer l'état après la transition du début du bit et l'état après 3T/4 comme cela ressort des figures 5 et 6.

Afin de s'affranchir des variations de régime de rotation du moteur, la période de temps T de référence utilisée pour décoder un bit n correspondant à la période $T_{n-1}$ mesurée sur le bit précédent.

On conçoit alors que pour qu'il y ait une erreur, c'est-à-dire par exemple pour que l'on prenne un 1 pour un 0 ou inversement, il faut une accélération absolue du régime, telle que $T < 3T_{n-1}/4$ ou $T > 3T_{n-1}/2$, soit avec un angle $\alpha$ pris pour le codage d'un bit, une accélération maximale admissible sans erreur de :

$$|d\omega/dt|_{max} = \omega_{min}^2/3\alpha$$

Sous démarreur, le régime instantané du moteur est très variable et son accélération dépend de la position angulaire de celui-ci entre les points morts hauts.

Ce régime et cette accélération peuvent être linéarisés partiellement comme cela est illustré sur les figures 7 et 8 respectivement.

Compte tenu de ces conditions de fonctionnement:

$d\omega/dt_{max} = 5000$ t/mn.s et $\omega_{min} = 150$ t/mn ==> $\alpha_{max} = 4,5°$aac (arbre à cames).

On conçoit alors que cette résolution impose un capteur extrêmement précis ou la réalisation d'une cible très difficile, car l'implantation sur l'arbre à cames limite son diamètre à environ 100 mm.

Ces contraintes rendent cette solution coûteuse et difficilement industrialisable.

Par contre, si l'on concentre l'information codée dans les secteurs angulaires dans lesquels le régime de rotation du moteur décélère, les conditions de fonctionnement du capteur sont moins sévères et la résolution peut être plus faible, c'est-à-dire : $d\omega/dt_{max}$=1500 t/mn.s et $\omega_{min}$ = 150 t/mn = = > $\alpha_{max}$= 15°aac (arbre à cames).

On conçoit alors que les moyens de codage comprennent par exemple trois bits, mais pour assurer un bon décodage du premier bit, il est préférable de le faire précéder d'un code (bit) par exemple à l'état logique 0 de synchronisation qui fournira la période T de référence.

De même, le code (bit) de parité sera suivi d'un code (bit) 1 de stop indiquant la fin du codage, dont la fin est en phase avec le point mort haut du cylindre correspondant. Ainsi, le décodage du numéro d'un cylindre est terminé avec une avance de 12°aac (arbre à cames) soit 24°vbq (vilebrequin) avant le point mort haut.

En cas de défaillance de la fonction régime, les transitions entre les bits de codage permettent de connaître la position du vilebrequin avant le point mort haut avec une précision dégradée du fait de l'échantillonnage angulaire de 24°vbq (vilebrequin).

L'ensemble des cinq codes (bits), c'est-à-dire de synchronisation, de codage de numéro de cylindre, de parité et de fin, occupe par exemple un secteur angulaire de 60° placé dans une zone où l'accélération du régime moteur est négative et réduite.

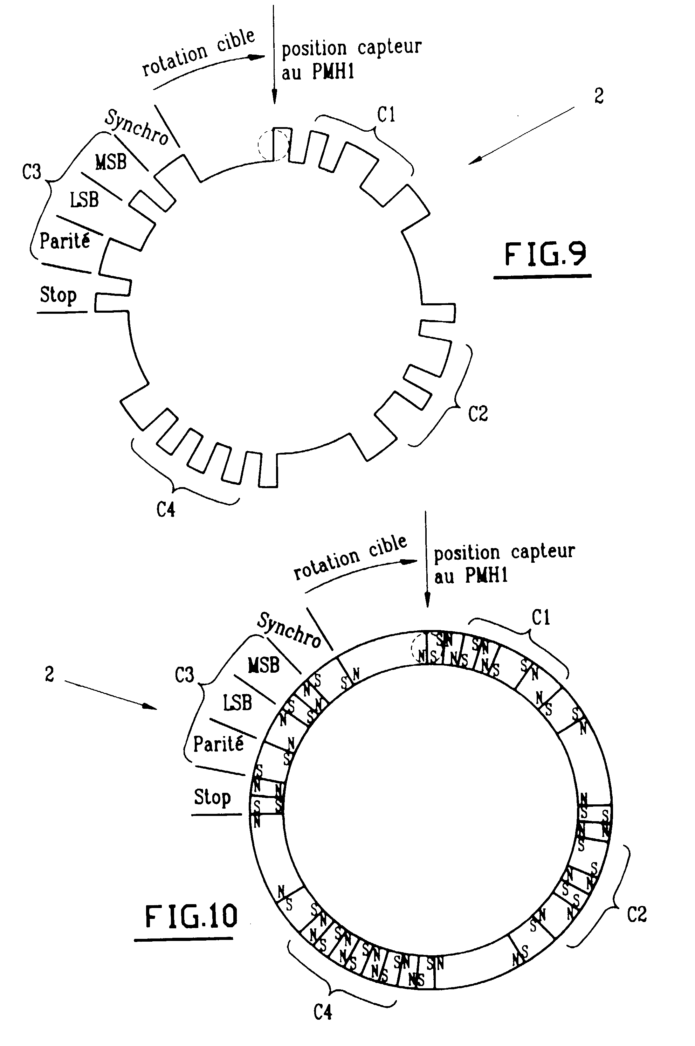

A titre d'exemple concernant la réalisation de cette cible 2, on pourra se reporter aux figures 9 et 10.

Sur la figure 9, on a représenté une cible 2 qui se présente sous la forme d'un disque métallique.

Dans cet exemple de réalisation, les moyens de codage associés aux cylindres C1, C2, C3 et C4 sont formés par une succession de portions métalliques et de trous de la cible et se présentent par exemple sous la forme de dents ménagées à la périphérie de la cible.

Le passage de cette succession de dents en face du capteur 3 qui est alors sensible à la présence d'un corps ferromagnétique, permet d'obtenir un signal électrique représentatif du développé de la cible 2.

L'analyse décrite précédemment de ce signal par les moyens correspondants permet de détecter la phase de fonctionnement du moteur.

Un autre mode de réalisation de la cible 2 est représenté sur la figure 10, dans laquelle la périphérie de la cible est constituée d'une matière plasto-ferrite aimantée par secteur. La polarisation magnétique de chaque secteur permet de coder la cible pour les cylindres C1, C2, C3 et C4. Un capteur 3 sensible au champ magnétique placé à la périphérie de celle-ci, délivre alors le signal correspondant aux moyens d'analyse.

On conçoit alors que dans le dispositif selon l'invention, les moyens de codage de position de la cible comprennent des codes binaires d'identification des numéros des cylindres du moteur, ces codes pouvant être associés à un code de synchronisation, un code de parité et un code de fin de codage.

Les moyens d'analyse 4 comprennent alors des moyens de reconnaissance de ces codes par détection d'un changement ou non d'état du signal de sortie du capteur 3 pendant une période de temps déterminée T qui peut être la période de codage associée au code précédent lu Tn-1.

Ainsi qu'on l'a indiqué précédemment, ces moyens de codage peuvent être prévus sur la cible 2 dans des positions angulaires correspondant à une période de décélération du régime de rotation du moteur.

Il va de soi bien entendu que bien que dans les exemples de réalisation décrits précédemment, la cible soit associée à un moteur à quatre cylindres, le dispositif de détection selon l'invention peut également être transposable à un moteur comportant un nombre quelconque de cylindres si les dimensions de la cible et la précision du capteur sont correctement adaptées aux conditions de fonctionnement sous démarreur de celui-ci.

Bien entendu, différents modes de réalisation de ce dispositif et notamment de la cible peuvent être envisagés.

## Revendications

**1.** Dispositif de détection du cycle de fonctionnement d'un moteur à combustion interne (1) à plusieurs cylindres, du type comportant une cible (2) munie de moyens de codage de la position angulaire du moteur dans le cycle, reliée à un arbre à cames du moteur, et associée à un capteur (3) de détection des moyens de codage de position lors de la rotation de la cible, raccordé à des moyens (4) de détection du cycle de fonctionnement du moteur par analyse du signal de sortie du capteur, les moyens de codage de la cible (2) comprenant au moins des codes binaires d'identification des numéros des cylindres du moteur (C1,C2,C3,C4) composés chacun d'un code de synchronisation, de codes d'identification du numéro du cylindre correspondant, et d'un code de fin de codage, caractérisé en ce que les moyens de codage de la cible comprennent en outre pour chaque cylindre (C1,C2,C3,C4) du moteur, un code de parité permettant la détection d'erreur.

**2.** Dispositif selon la revendication 1, caractérisé en ce que les moyens d'analyse (4) comprennent des moyens de reconnaissance des codes par détection d'un changement ou non d'état du signal de sortie du capteur (3) pendant une période de temps déterminée (T).

**3.** Dispositif selon la revendication 2, caractérisé en ce que la période de temps déterminée (T) correspond à la période de codage associée au code précédent lu (Tn-1).

4. Dispositif selon l'une quelconque des revendications précédentes, caractérisé en ce que les moyens de codage de position sont prévus sur la cible (2), dans des positions angulaires correspondant à des périodes de décélération du régime de rotation du moteur (1).

5. Dispositif selon l'une quelconque des revendications précédentes, caractérisé en ce que les moyens de codage sont formés par une succession de portions métalliques et de trous de la cible (2).

6. Dispositif selon la revendication 5, caractérisé en ce que les moyens de codage sont formés par des dents à la périphérie de la cible (2).

7. Dispositif selon l'une quelconque des revendications 1 à 4, caractérisé en ce que les moyens de codage sont formés par une succession de portions magnétiques polarisées de la cible (2).

**Patentansprüche**

1. Vorrichtung zur Erfassung des Arbeitszyklus eines Mehrzylinder-Verbrennungsmotors (1), die ein mit Mitteln zur Kodierung der Winkelstellung des Motors im Zyklus versehenes Ortungsobjekt (2) aufweist, das mit einer Nokkenwelle des Motors verbunden ist und dem ein Fühler (3) zur Erfassung der Stellungskodiermittel bei der Drehung des Ortungsobjekts zugeordnet ist, der mit Mitteln (4) zur Erfassung des Arbeitszyklus des Motors durch Analyse des Ausgangssignals des Fühlers verbunden ist, wobei die Kodiermittel des Ortungsobjekts (2) mindestens Binärkodes zur Identifizierung der Nummern der Zylinder des Motors (C1, C2, C3, C4) umfassen, die jeweils aus einem Synchronisationskode, Kodes zur Identifizierung der Nummer des entsprechenden Zylnders und einem Kodierungsendekode bestehen, dadurch gekennzeichnet, daß die Kodiermittel des Ortungsobjekts außerdem für jeden Zylinder (C1, C2, C3, C4) des Motors einen Paritätskode aufweisen, der die Fehlererfassung gestattet.

2. Vorrichtung nach Anspruch 1, dadurch gekennzeichnet, daß die Analysemittel (4) Mittel zum Erkennen der Kodes durch Erfassung einer Zustandsänderung oder - nichtänderung des Ausgangssignals des Fühlers (3) während eines bestimmten Zeitraums (T) aufweisen.

3. Vorrichtung nach Anspruch 2, dadurch gekennzeichnet, daß der bestimmte Zeitraum (T) dem dem vorhergehenden gelesenen Kode (Tn-1) zugeordneten Kodierzeitraum entspricht.

4. Vorrichtung nach einem der vorhergehenden Ansprüche, dadurch gekennzeichnet, daß die Stellungskodiermittel auf dem Ortungsobjekt (2) in Winkelstellungen vorgesehen sind, die Zeiträumen der Senkung der Drehzahl des Motors (1) entsprechen.

5. Vorrichtung nach einem der vorhergehenden Ansprüche, dadurch gekennzeichnet, daß die Kodiermittel durch eine Folge von Metallbereichen und Löchern des Ortungsobjekts (2) gebildet sind.

6. Vorrichtung nach Anspruch 5, dadurch gekennzeichnet, daß die Kodiermittel von Zähnen auf dem Umfang des Ortungsobjekts (2) gebildet sind.

7. Vorrichtung nach einem der Ansprüche 1 bis 4, dadurch gekennzeichnet, daß die Kodiermittel von einer Folge von polarisierten magnetischen Bereichen des Ortungsobjekts (2) gebildet sind.

**Claims**

1. Device for detecting the operating cycle of an internal combustion engine (1) with several cylinders, of the type comprising a target (2) furnished with means for encoding the angular position of the engine within the cycle, and which is connected to a camshaft of the engine, and is associated with a sensor (3) for detecting the position encoding means during the rotation of the target, said sensor being linked to means (4) for detecting the operating cycle of the engine by analysing the output signal from the sensor, the means of encoding the target (2) comprising at least binary identification codes for the numbers of the engine cylinders (C1,C2,C3,C4) each composed of a synchronization code, of identification codes for the number of the corresponding cylinder, and of an end-of-encoding code, characterized in that the means of encoding the target furthermore comprise for each cylinder (C1,C2,C3,C4) of the engine, a parity code allowing error detection.

2. Device according to Claim 1, characterized in that the means of analysis (4) comprise means of recognizing the codes by detecting a change or otherwise of the state of the output signal from the sensor (3) during a specified time period (T).

3. Device according to Claim 2, characterized in that the specified time period (T) corresponds to the encoding period associated with the previous code read (Tn-1).

4. Device according to any one of the preceding claims, characterized in that the position encoding means are provided on the target (2), in angular positions corresponding to deceleration periods of the rotation regime of the engine (1).

5.  Device according to any one of the preceding claims, characterized in that the encoding means are formed by a succession of metal portions and of holes of the target (2).

6.  Device according to Claim 5, characterized in that the encoding means are formed by teeth at the periphery of the target (2).

7.  Device according to any one of Claims 1 to 4, characterized in that the encoding means are formed by a succession of polarized magnetic portions of the target (2).

EP 0 761 953 B1

FIG.1

| N° du cylindre | MSB | LSB | Parité |
|---|---|---|---|
| 1 | 0 | 0 | 1 |
| 2 | 0 | 1 | 0 |
| 3 | 1 | 0 | 0 |
| 4 | 1 | 1 | 1 |

FIG.2

FIG.3

0    0    1    1    0    1

ou

$\underline{\text{FIG.4}}$

$\underline{\text{FIG.5}}$     $\neq$ — 0

$\underline{\text{FIG.6}}$     $\neq$ — 1

Régime
(t/mn)

300

150

0         35°              90°         angle vbq

PMH n                    PMH n+1

$\underline{\text{FIG.7}}$

Accélération
(t/mn.s)

5000

−1500

$\underline{\text{FIG.8}}$

8

FIG.9

FIG.10